# EUROPEAN PATENT APPLICATION

(11) **EP 1 271 979 A1**
(43) Date of publication of application: **02.01.2003**
(21) Application number: 02253062.0
(22) Date of filing: 30.04.2002
(51) Int. Cl.: H04Q 7/34

(54) **A method for identifying a lost call location in a wireless network system, and corresponding wireless network system**

(30) Priority: 21.06.2001 US 884910
(71) Applicant: LUCENT TECHNOLOGIES INC., Murray Hill, New Jersey 07974-0636 (US)
(72) Inventor: Ghandeharizadeh, Shahryar, Bridgewater, New Jersey 08807 (US); Lin, Wen-Pin, Morristown, New Jersey 07960 (US)
(74) Representative: Buckley, Christopher Simon Thirsk

(57) **Abstract**

In the method and apparatus troubleshooting lost call location, a connect message is received from a mobile terminal to establish a call, which is continuously monitored. If a parameter associated with the continuously monitored call falls below a threshold, information associated with the location of the mobile terminal is provided. If the call terminates normally, before the parameter falls below threshold, information associated with the call is discarded.

## Description

### BACKGROUND OF THE INVENTION

### 1. Field of the Invention

The present invention relates to troubleshooting lost calls in a wireless network. In particular, the present application relates to monitoring signal strength in determining the location of a mobile terminal in a wireless network when a signal is lost.

### 2. Description of Related Art

With the undeniable proliferation of wireless network systems throughout the world, it has become apparent that one major problem facing service providers is determining areas within the coverage area of a wireless network which may be subject to lost calls.

In conventional network systems a service provider can identify the location of a mobile terminal only to the cell and sector level. When a mobile terminal complains that a call is dropped during a conversation, a service provider has no way of identifying the specific location corresponding to when the call was dropped. Moreover, information of this kind may become increasingly important as successive dropped calls in a particular area may suggest blind spots or the like which service providers are not able to detect during conventional driving tests. While driving test can be useful, it is easy to imagine that driving tests cannot be expected to cover all areas in a service provider's coverage area where a mobile terminal may be present.

Thus, it would be appreciated in the art for a method and apparatus to identify locations where calls are lost in order to reduce the lost call rate and improve service quality while increasing revenue to the service provider.

### SUMMARY OF THE INVENTION

In order to meet the above described needs in the art, a method and apparatus are provided to identify lost call locations. In accordance with various exemplary embodiments of the present invention, a wireless network system may be provided with, for example, a Position Control Center (PCC), a Position Detection Center (PDC), and a Position Database (PDB), with which to monitor, detect, and store information related to a lost call. Accordingly, if a signal level associated with a monitored mobile terminal call is lost, location information related to the call which information identifies the last location of a mobile terminal and a time stamp may be stored in a database. If the call terminates normally, then information need not be stored.

### BRIEF DESCRIPTION OF THE DRAWINGS

The present invention will become more fully understood from the detailed description given herein below and the accompanying drawings, which are given by way of illustration only, and thus are not imitative of the present invention, and wherein:
FIG 1 is a block diagram illustrating a network system for identifying lost call location in accordance with the present invention;
FIG 2A is a signal flow diagram illustrating signal flows in accordance with the present invention; and
FIG 2B is a signal flow diagram further illustrating signal flows in accordance with the present invention.

### DETAILED DESCRIPTION OF THE DRAWINGS

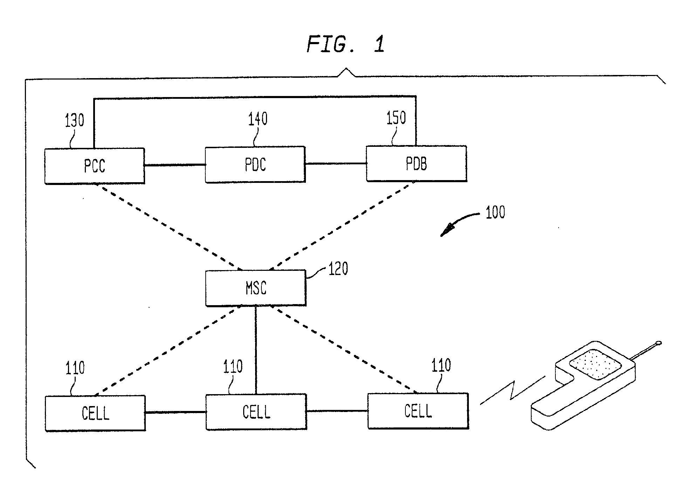

In accordance with various exemplary embodiments of the present invention, a block diagram of an exemplary system for implementing the present invention is shown in FIG 1. Therein, it can be seen that wireless system 100 for the purpose of illustration includes cells 110 coupled to Mobile Switching Center (MSC) 120, Position Control Center (PCC) 130, Position Detection Center (PDC) 140, and Position Database (PDB) 150, which are interconnected with each other and with MSC 120. It should be noted that PCC 130, PDC 140, and PDB 150 are preferably external devices to allow the present invention to be easily integrated with current wireless network systems. It will be appreciated by those skilled in the art, however, that such features as will be described in accordance with various exemplary embodiments could also be implemented within devices already in place in wireless network systems. Moreover, exemplary features of the present invention allow the location of Mobile Terminal 160 to be monitored according to any well known locating technique. For example, longitude and latitude information from a Global Positioning System (GPS) receiver embedded in Mobile Terminal 160 could be sent to PDC 140, or alternatively, triangulation information obtained by the system could be collected at PDC 140 or elsewhere in the system consistent with exemplary embodiments of the present invention. If a call is dropped, then in accordance with exemplary embodiments of the present invention, the location of the call drop can be logged along with the time to identify, for example, geographical and/or temporal correlation with call drop activity. Such features allow sources of excessive or extraordinary call drop rates to be better identified.

Accordingly, PCC 130 may be configured to receive messages from MSC 120 over either a wireless air interface, a hard wired connection or optical fiber as would be appreciated by one of skill in the art. It would further be appreciated that Mobile Terminal 160 is preferably a wireless handset but may also be any other terminal capable of mobile wireless operation such as for example, a portable computing device or the like.

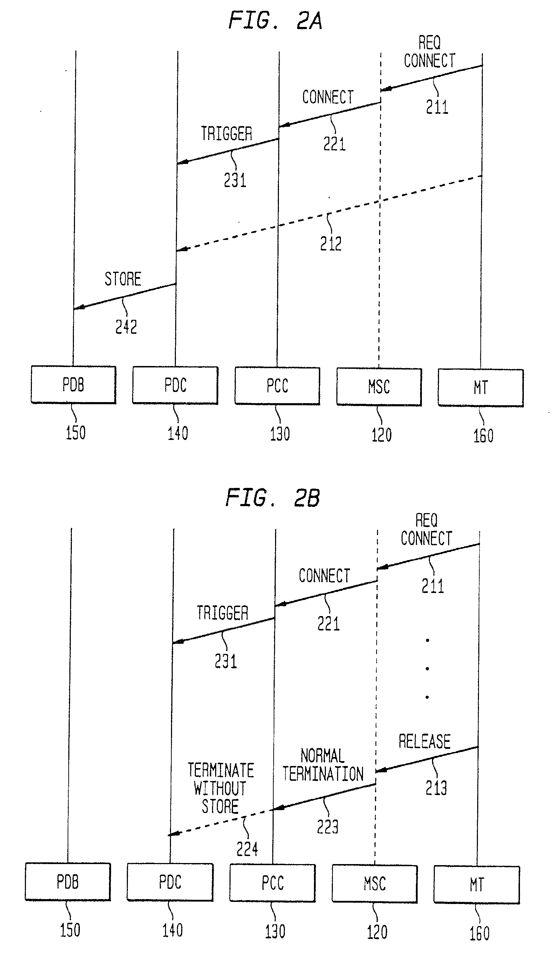

Thus, in accordance with various exemplary embodiments of the present invention as illustrated in FIG 2A, REQ CONNECT message 211 is issued from Mobile Terminal 160 to MSC 120 to establish a connection. MSC 120 further issues CONNECT message 221 to PCC 130 when a successful connection has been established. Upon receipt of CONNECT message 221, PCC 130 further generates trigger message 231 to PDC 140 causing PDC 140 to begin continuously monitoring the call. During continuous monitoring, information regarding the location of the call is continuously updated so that if the call is dropped, the most recent information is available. Upon loss of the call, PDC 140 preferably issues STORE message 242 to PDB 150 indicating that the location of Mobile Terminal 160 and a time stamp should be stored. PDC 140 generates the location information in terms of, for example, longitude and latitude in the case of GPS, and may further generate the time stamp information although time stamp information may alternately be generated elsewhere in the system, for example, in the PDB 150. Call loss may be determined either by establishing that the signal level of Mobile Terminal 160 has fallen beneath a predetermined threshold or has been lost altogether. Accordingly, PDC 140 may independently monitor the signal associated with Mobile Terminal 160 and issue STORE message 242 if it is determined that the call has been lost, preferably using detected parameters such as a zero signal strength level on signal 212.

By simply storing location information and a time stamp associated with each dropped call, correlations may be performed on the information stored in PDB 150 such that consistently troublesome locations and/or times may be identified and further investigated. As previously described, the location information stored in PDB 150 is preferably longitude and latitude information generated by PDC 140, to give a more precise fix on the exact location where a call is dropped. Accordingly, specific trouble spots may be identified and corrective measures taken to improve signal reception and transmission characteristics in these locations.

It should be noted that in accordance with various exemplary embodiments of the present invention, normal call termination, as illustrated in FIG 2B, invokes slightly different operation than when a call is dropped. Mobile Terminal 160 may issue REQ CONNECT message 211 to MSC 120 which, in response, issues a CONNECT message 221 to PCC 130. PCC 130 generates a trigger message 231 to PDC 140 to begin continuous monitoring in the above described fashion. However, when Mobile Terminal 160 releases the call and RELEASE message 213 is issued to MSC 120 indicating that the call has been released, MSC 120 may generate NORMAL TERMINATION message 223 triggering a TERMINATE WITHOUT STORE 224 or message from the PCC 130 to the PDC 140 to indicate that monitoring should be terminated and call information be discarded so as not to accumulate excess unneeded information in PDB 150.

The invention being thus described, it will be obvious that the invention may be modified in various ways. Such minor variations, however, are not to be regarded as a significant departure from the invention and all such modifications are intended, where appropriate, to fall within the scope of the appended claims.

## Claims

1. A method for identifying a lost call location in a wireless network system comprising:
receiving a connect message from a mobile terminal to establish a call;
continuously monitoring radio signals associated with the established call;
determining if a parameter associated with the continuously monitored radio signal falls below a threshold; and
providing information associated with the location of the mobile terminal if the parameter falls below the threshold.

2. The method of claim 1, wherein the step of continuously monitoring further includes the step of:
sending a trigger message responsive to receiving the connect message;
wherein the trigger message causes the continuous monitoring of the radio signals.

3. The method of claim 1, wherein
the step of providing information includes storing the information associated with the location of the mobile terminal if the parameter falls below the threshold; and
the step of continuously monitoring includes the steps of,
continuously updating the information associated with the location of the mobile terminal;
receiving a termination message from an MSC associated with a normal termination of the call; and
discarding the updated information associated with the location of the mobile terminal in response to the normal termination of the call.

4. A wireless network system comprising:
a MSC; and
a controller coupled to the MSC, the controller configured to,
receive a connect message from a mobile terminal to establish a call;
continuously monitor radio signals associated with the established call;
determine if a parameter associated with the continuously monitored radio signals falls below a threshold; and
provide information associated with the location of the mobile terminal if the parameter falls below the threshold.

5. The wireless network system of claim 4, wherein the controller comprises:
a Position Control Center (PCC) receiving the connect message and outputting a trigger message in response thereto; and
a Position Detection Center (PDC) continuously monitoring for the radio signal in response to the trigger message.

6. The wireless network system of claim 4 ,wherein
the controller comprises a Position Database (PDB) storing the information associated with the location of the mobile terminal; and wherein
the controller, in continuously monitoring, is further configured to,
continuously update the information associated with the location of the mobile terminal;
receive a termination message from the MSC associated with a normal termination of the call; and
discard the updated information associated with the location of the mobile terminal in response the normal termination of the call.

7. The method of claim 1 or the wireless network system of claim 4, wherein the threshold is a zero signal strength level.

8. The method of claim 1 or the wireless network system of claim 4, wherein the information includes the location of the mobile terminal in terms of longitude and latitude.

9. The method of claim 1 or the wireless network system of claim 4, wherein the information includes a time stamp.
